# EUROPEAN PATENT APPLICATION

(11) **EP 1 640 464 A1**
(43) Date of publication of application: **29.03.2006**
(21) Application number: 03750729.0
(22) Date of filing: 22.09.2003
(51) Int. Cl.: C22B 7/04, C22B 21/00

(54) **ALUMINIUM DROSS COOLING METHOD AND INSTALLATION**

(30) Priority: 03.03.2003 ES 200300500
(71) Applicant: Befesa Aluminio Bilbao, S.L., 48950 Erandio - Vizcaya (ES)
(72) Inventor: MIRONES VITINI, Carlos Javier, SANTANDER 39003 (ES)
(74) Representative: Carvajal y Urquijo, Isabel
(86) International application number: PCT/ES2003/000471
(87) International publication number: WO 2004/079024

(57) **Abstract**

The invention relates to an aluminium dross cooling method and installation, in which the dross is compacted in a mould. According to the invention, the dross is vibrated during the compaction operation. For said purpose, the compaction operation is performed using an installation comprising: an inner platform (1) on which a mould (5) and the dross to be cooled are disposed; and a frame having a tamper (12) suspended therefrom, which is used to compact the dross. The aforementioned tamper comprises a vibrating mechanism (17) which is activated when the element begins to fall and which remains active during the dross compaction phase.

## Description

The present invention relates to a process for aluminum slag cooling, and more specifically to a process for aluminum slag cooling by means of the pressing thereof, achieving a fast seal, for the purpose of the slag not being in contact with the air, preventing the Al from reacting with oxygen and the nitrogen loosing metal content.

The invention also has as an object the installation by means of which the said process is carried out.

Liquid aluminum handling in aluminum foundries necessarily implies the production of a residual material called aluminum slag in an approximate amount of 1-15% of the handled metal weight. It originates due to the tendency of aluminum to normally oxidize. The aluminum oxide generated is not always a continuous layer, but rather is broken down and heterogeneous essentially lying above the metal. Other possible impurities generated in the furnace due to reactions with the atmosphere, with the refractories and with impurities supplied with the loads in the furnace are incorporated to the slag mass, forming a very complex material. The addition of slagging agents complicates the reactions and is unadvisable.

This slag cannot remain close to the liquid metal for a long time since it may become mixed therewith and contaminate it with oxide additions that would significantly reduce its quality. Skimming must be conducted, during which process metal is entrained.

It is important to point out that the more aluminum reacts, the greater the weight of the generated slag and the less its metallic purity. Minimization of the residues produced in aluminum scrap recycling is one of the tasks that is object of never-ending attention and is centered on each occasion in different aspects of the process. In the present case, the reduction of the amount of slag produced in the melting of the materials to be recycled in the reverberatory furnace has been an object in the present case. This is an idea in which there are several implications:
- Minimizing the waste volume and increasing the recovered metal.
- Reducing the environmental impact of an operation producing fumes and dust.
- Contributing to energy savings by preventing loss of metal.

This all makes any action for improvement which allows reducing the amount of slag produced very interesting.

The present invention has as an object a new slag processing outside the furnace so that it quickly cools and does not lose metal content. Subsequently in the recycling of the metal from the slag in an aluminum refinery, a maximum recovered metal will be obtained.

It is necessary to point out that a higher metal content of the slag indicates good management of the melting process, and since its amount is also minimized, there is also a greater assurance of a higher amount of liquid metal and metal recovery. The contrary would be to have aluminum-deficient slag, meaning that the slag burned up inside the furnace, or that it was not subsequently treated in an appropriate manner, both being symptoms of poor management.

Slag can have 65%, 75% metal aluminum, 2.5% aluminum nitride, 2.5% aluminum carbide, 20% alumina (aluminum oxide). It can also contain irons, refractories and other residues of reactions, additions or contaminations inside the furnace. The contained free metal aluminum is a result of the entrainments which inevitably occur upon removing it from the furnace and it may be mixed with the remaining materials or clearly separated, so that it may flow freely as a liquid.

Other possible impurities generated inside the furnace due to reactions with the atmosphere, with refractories and with impurities supplied with the furnace loads are incorporated to the slag mass, forming a very complex material.

Slag is hot not only because it is inside a furnace but because the metal trapped therein reacts with oxygen and releases a large amount of heat. Since slag is a highly isolating material, the heat is not dissipated and a maximum possible temperature of 2,400°C or more can be reached, the oxide itself melting. The average temperature is considered to be 900°C.

Slag can react inside the furnace, so it can be very hot and have little metal content, or it may do so outside the furnace, when it "opens up" in the skimming, being exposed to the atmosphere of the air. The first case is the result of poor working practice, and the second case can be partly corrected.

Slag is a hazardous, toxic residue according to the law. This is mainly based on the fact that it releases explosive and toxic gases when it becomes wet. These gases proceed from reactions of the water with the fine, broken up aluminum and aluminum nitride, forming hydrogen and ammonia, respectively.

When slag cools under 400-450°C, oxidization of the aluminum forming it does not occur. The so-called aluminothermy phenomenon stops and metal is not lost. This is ideal for achieving the proposed objectives.

This can be achieved by feeding the slag to different devices in which it is cooled. Here reference is made to presses, centrifuges, revolving screens, rollers, boxes with an inert atmosphere, etc. Liquid metal flowing from the slag and recovered in that instant and a cooled mass which can be powdery and in bulk, or in more or less solid or dense blocks, are obtained in the operation. The latter are those which will be used to recycle in the authorized refineries.

In the past the applicant developed the so-called rotary coolers, suitable for treating large amounts of slag, and were well extended worldwide and on which there is still ample technical literature in technical journals and magazines. There are still several in operation.

Press-type coolers subsequently became popular, there being several models thereof. The advantages of these with respect to the former is that they are more cost-effective and compact, they can be used for small amounts of slag, and there is a larger amount of liquid metal flowing in the same operation so as to be reincorporated to the furnace in that instant. The drawback is that there is no effective cooling of the slag, so oxidization of the metal inside the formed block persists.

The present invention has as an object a process for aluminum slag cooling by means of the pressing thereof carried out such that it achieves isolating the metal from oxygen and nitrogen in the air so as to prevent the loss of metal.

The process of the invention brings together the advantages of press-type equipment, which are more economical and compact and allow a larger amount of liquid metal flowing from the slag during the pressing process, and the advantages of equipment and processes using inert atmosphere to isolate the metal from oxygen and nitrogen in the air.

According to the process of the invention, during the slag compacting process, said slag is subjected to a vibration process by means of which the molten metal is caused to flow from the interior of the slag to the walls of the mold containing the slag, where it cools and solidifies, producing a surface closure of the slag mass isolating the slag from oxygen and nitrogen in the air, thus preventing reaction within the slag mass.

Slag briquetting will preferably be carried out in a compactor provided with a dropping rammer or weight suspended from a hoist to compress the slag contained in a mold. According to the invention, the vibrations are transmitted to the slag through the weight or rammer by means of which the compacting is carried out, to which end the weight is provided with vibration elements or means.

The slag skimming and compaction process is the phase prior to the casting of the aluminum. The resulting slag is compacted so as to prevent oxygen and nitrogen in the air from penetrating its mass and continuing to react with the aluminum it contains. Upon closing the air intake the slag is put out due to a lack of a burning agent and it cools upon being put out; once cold, the slag is demolded for the fusion thereof in the rotary furnace.

The slag generated in smelting is collected in special molten steel molds and these are taken to the compactor with a suitable vehicle one by one. Once the slag is in the molds, the top part is cleaned by pushing the slag that had remained on the planar part to the interior of the casing so as to prevent it from falling to the ground during transport. The first mold is taken to the compactor once it is in a suitable position and the compactor commences operation; first the vibration begins and the vibrating weight, which is hanging from a hoist, drops down on the slag mold; it continues to drop and compact the slag. When the slag is compact, there is no air inside it and no further air from the exterior is introduced through the surface of the briquette. The reaction has concluded and now cooling of the slag is a matter of time. In about two hours the briquettes are cold and the molds can be placed on the demolding racks where the briquettes will be demolded.

According to another aspect of the invention the process described is carried out by means of an installation consisting of a compactor including a bottom platform on which a mold with the slag to be cooled is arranged, a rack from which a rammer is suspended by means of a hoist, and guides for leading said rammer in its vertical movement towards the slag mass contained in the mold.

This compactor is characterized in that the rammer is provided with a vibrating mechanism which is actuated when the rammer begins to drop upon detecting the presence of a mold with slag on the bottom platform, this vibration being maintained during the pressing operation so as to transmit the vibrations to the slag mass.

The compactor will be provided with a mold position detector close to the bottom platform for the actuation of the motor of the hoist from which the rammer is suspended and of the vibrators thereof.

Furthermore the hoist from which the rammer is suspended hangs from its top portion from the rack through an elastic suspension based on compression springs. A sensor is arranged close to these springs which is responsible for causing the hoist to stop when it detects the decompressed status of said springs.

The features of the invention, the constitution of the installation and the carrying out of the process object thereof will be better understood with the following description, made in reference to the attached drawings in which a non-limiting embodiment is shown.

In the drawings:
Figure 1 shows a front elevational view of a compactor constituted according to the invention.
Figure 2 shows a side elevational view of the compactor of Figure 1.
Figure 3 shows a plan view of the same compactor.
Figure 4 corresponds to detail A of Figure 1 on a larger scale.
Figure 5 shows a plan view of the detail of Figure 4.
Figure 6 shows a partial section of the top part of the rack of the compactor, taken along the VI-VI section line, on a larger scale.
Figure 7 shows a section of the mold locking latches taken along the VII-VII section line of Figure 3.
Figure 8 shows a front elevational view of a mold containing the slag to be cooled.

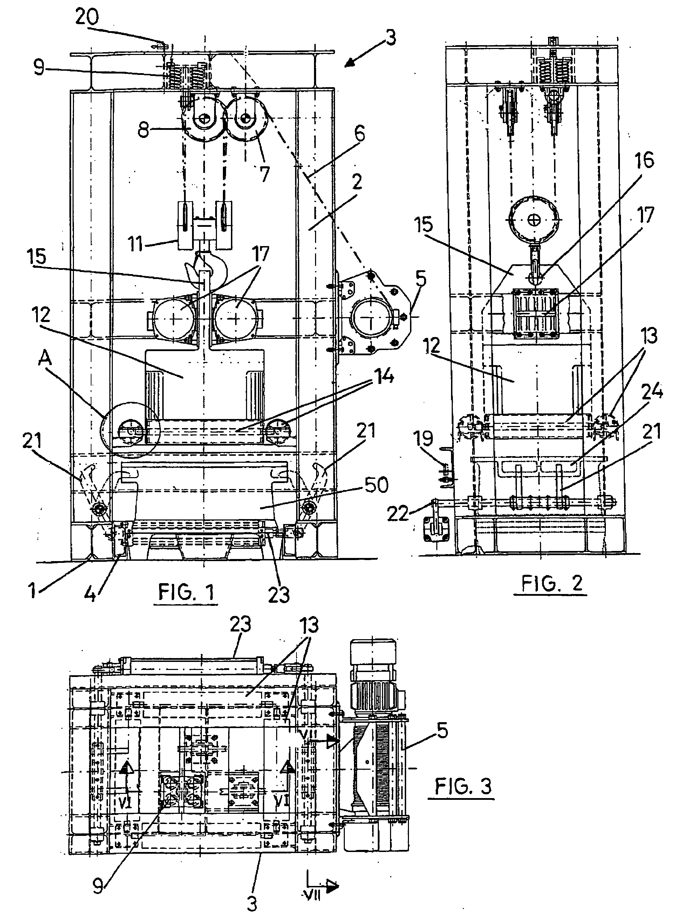

The slag compaction installation shown in figures 1 to 3 comprises a bottom platform 1 on which a rack made up of vertical columns 2 and a planar top structure 3 is assembled. Bottom guides 4 located immediately above the platform 1 are assembled between the columns 2 so as to guide the introduction of a mold 5 containing the slag.

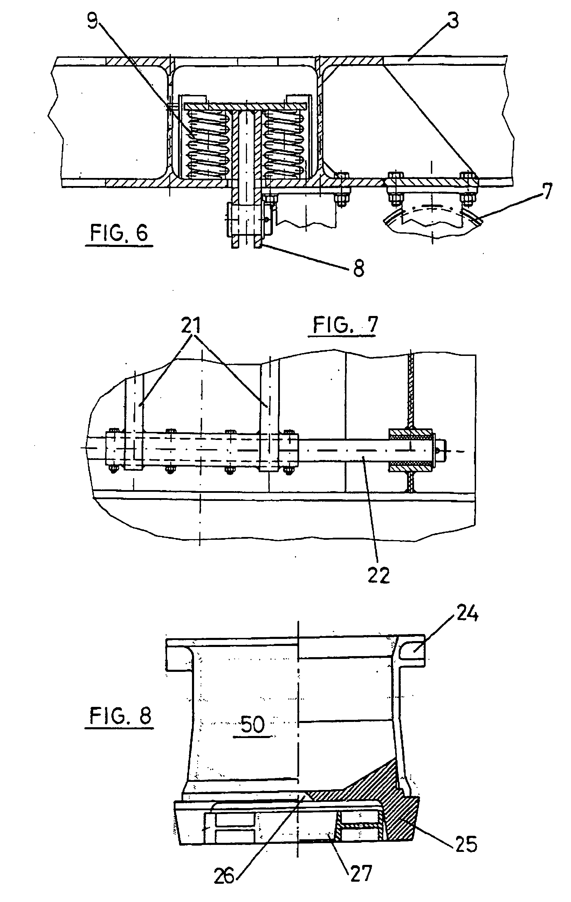

Assembled on the vertical columns 2 there is a hoist 5, the cable 6 of which passes through pulleys 7 and 8, the second of which pulleys is suspended from a set of compression springs 9, a head 11 with a hook from which a rammer or weight 12 is suspended hanging from both pulleys through the cable 6. The arrangement of the compression springs 9 from which the pulley 8 is suspended through the top plate 13, while pulley 7 is suspended directly from the planar top structure 3, can be seen in more detail in Figure 6.

Guiding means are arranged between the columns 2 of the rack for guiding the rammer 12 in its vertical movement. These guides consist of four rollers 14, each one assembled between every two consecutive columns 2, defining a square passage so as to guide the rammer 12 in its vertical movement, such that it can act on the mold 5 arranged on the platform 1.

As can be seen in the drawings, the rammer 12 has on the top portion a vertical central plate 15 provided with a suspension opening 16 to which the hook of the head 11 is connected. Two rotary vibrators 17 are also fixed on this plate, one on either side thereof.

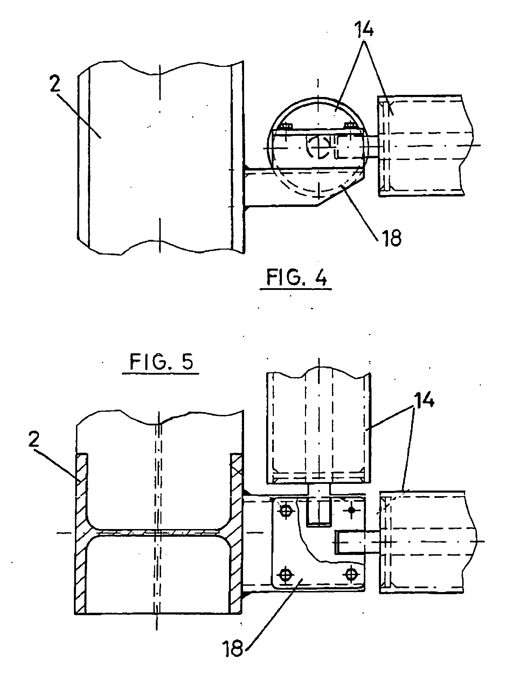

As can be better seen in Figures 4 and 5, the rollers 14 are assembled on the columns through supports 18 fixed to said columns.

A sensor 19 is arranged on the bottom part of the rack which is responsible for detecting the presence of a mold 5 on the platform 1.

Another sensor 20 is arranged in the top part of the rack, above the structure 3, so as to detect the status of the springs 9, either compressed or decompressed.

Two sets of latches 21 are arranged on the bottom part of the rack, located on opposite sides which, as can best be seen in Figures 2 and 7, are assembled on a shaft 22 that can be actuated by means of a pneumatic cylinder 23, Figure 3, to cause the swinging of the latches 21 between an inactive position, in which they are separated from the mold 5, and an active position in which they swing towards the mold until being partially introduced in housings 24 thereof.

As can be better seen in Figure 8, the mold 5 is open at its top and bottom bases, being closed at the bottom part by means of a plate 25 having openings 26 in the bottom. A tray 27 is arranged under this plate for collecting molten metal that may flow through the openings 26.

With the constitution discussed, when the sensor 19 detects the presence of a mold 5 on the platform 1 containing aluminum slag, it actuates the hoist 5, starting the drop of the rammer 12 at the same time that the vibrators 17 start operating. As the rammer rests on the slag, it compresses the slag as it drops, while at the same time transmitting to it the vibration produced by the vibrators 17. This action makes the molten metal flow towards the walls of the mold, where it undergoes fast cooling until it solidifies, creating a superficial layer which prevents the inlet of air and therefore oxidation within the slag mass. The oxidation reaction is thus eliminated, favoring with this the slag cooling.

As the rammer 12 drops, when the sensor 20 detects the decompressed status of the springs 9, which will be when said rammer rests completely on the slag contained in the mold 5, said sensor will emit a stop command to the hoist 5 and vibrators 17, after which time the raising of the rammer can be carried out.

Once the slag is compressed in the manner set forth, the mold can be removed from the compactor so as to allow said slag to cool in order to carry out the demolding operation by means of traditional installations.

The constitution of the molds, which are open at their top and bottom bases, as shown in Figure 8, together with the internal shape thereof, allows easily carrying out the demolding operation by separating the bottom plate 25.

In summary, with the process and installation of the invention, due to the effect of the vibration transmitted to the slag during the slag pressing process thereof, the liquid metal flows towards the surface, where it quickly solidifies creating a superficial shell closing off the passage of oxygen to the interior of the slag, thus preventing oxidation of the metal, so the invention brings together the advantages of press-type equipment and of equipment using inert atmosphere, such as was previously pointed out.

## Claims

1. A process for aluminum slag cooling by means of compacting the slag in a mold, **characterized in that** during the compacting operation the slag is subjected to a vibration process, by means of which the molten metal is caused to flow from the interior of the slag mass to the walls of the mold, where it solidifies, producing a superficial closure of said mass, isolating the slag from the oxygen and nitrogen in the air, paralyzing the reaction thereof.

2. A process according to claim 1, **characterized in that** the vibration is transmitted to the slag through the weight or rammer by means of which the compacting of said slag is carried out.

3. An installation for aluminum slag cooling, consisting of a compactor including a bottom platform on which a mold with the slag to be cooled is arranged; a rack from which a rammer is suspended by means of a hoist; and guides for leading said rammer in its vertical movement towards the slag mass contained in the mold, **characterized in that** said rammer has a vibrating mechanism which is actuated when the dropping of the piston begins and is maintained during the compacting operation to transmit the vibrations to the slag mass.

4. An installation according to claim 3, **characterized in that** the rammer has a vertical central plate at the top portion provided with a suspension opening, to which plate two rotary vibrators are fixed, one on either side thereof, in symmetrical positions with respect to said plate and under the suspension opening.

5. An installation according to claims 3 and 4, **characterized in that** it has a sensor close to the bottom platform detecting the position of a mold on said platform for the actuation of the hoist from which the rammer is suspended and of the vibrators thereof.

6. An installation according to claims 3 and 5" **characterized in that** the hoist from which the rammer is suspended hangs from its top portion from the rack through an elastic suspension, constituted of compression springs, close to which springs a sensor is arranged which is responsible for causing the hoist to stop upon detecting the decompressed status of said springs.
